# FASCICULE DE BREVET EUROPEEN

(11) **EP 3 071 447 B1**
(45) Date de publication et mention de la délivrance du brevet: **08.01.2020**
(21) Numéro de dépôt: 14814938.8
(22) Date de dépôt: 20.11.2014
(51) Int. Cl.: B60P 3/00

(54) **AGRÈS DE STOCKAGE, DE MANUTENTION ET DE TRANSPORT DE PLAQUES DE GRANDES DIMENSIONS, VÉHICULE L'INCORPORANT ET PROCÉDÉ DE TRANSPORT PAR UN TEL VÉHICULE**
VORRICHTUNG FÜR LAGERUNG, HANDHABUNG UND TRANSPORT VON GROSSEN PLATTEN, FAHRZEUG MIT DIESER EINGEBAUTEN VORRICHTUNG SOWIE TRANSPORTVERFAHREN MIT DIESEM FAHRZEUG
APPARATUS FOR STORING, HANDLING, AND TRANSPORTING LARGE PLATES, VEHICLE HAVING SUCH APPARATUS BUILT THEREIN AND TRANSPORT METHOD WITH SUCH A VEHICLE

(30) Priorité: 21.11.2013 FR 1361470
(43) Date de publication de la demande: 28.09.2016
(73) Titulaire: Saint-Gobain Glass France, 92400 Courbevoie (FR)
(72) Inventeur: LEMAILLE, Maurice, 60200 Compiegne (FR); BAQUET, Erwan, 60200 Compiegne (FR)
(74) Mandataire: Saint-Gobain Recherche
(86) Numéro de dépôt international: PCT/FR2014/052974
(87) Numéro de publication internationale: WO 2015/075385

(56) Documents cités:
- EP-A1- 1 745 980
- US-A- 5 209 540

## Description

La présente invention concerne le domaine du transport des plaques de grandes dimensions, plus particulièrement des plaques de verre de grand format et des agrès qui sont utilisés pour les stocker, les manutentionner et les transporter notamment par camion ou par train.

Ces agrès sont principalement de deux types, en L, i.e. monoversants, ou en A, i.e. à deux versants symétriques. Ce type d'agrès est par exemple décrit dans EP 1 723 002 de la demanderesse.

On entend par plaques de grandes dimensions des plaques qui ne peuvent pas être chargées dans des remorques de type « savoyarde », dont le plancher est à une hauteur de 80cm à 120cm, et la hauteur totale de la remorque limitée par le gabarit routier standard sous pont, qui est de 4,30m. Il s'agit de plaques de hauteur supérieure à 3m, par exemple égale ou supérieure à 3,2m. Il s'agit par exemple de plaques de verre de 6 x 3,2 mètres, empilées sur une épaisseur d'environ 1 mètre, atteignant un chargement maximal de l'ordre de 28 tonnes.

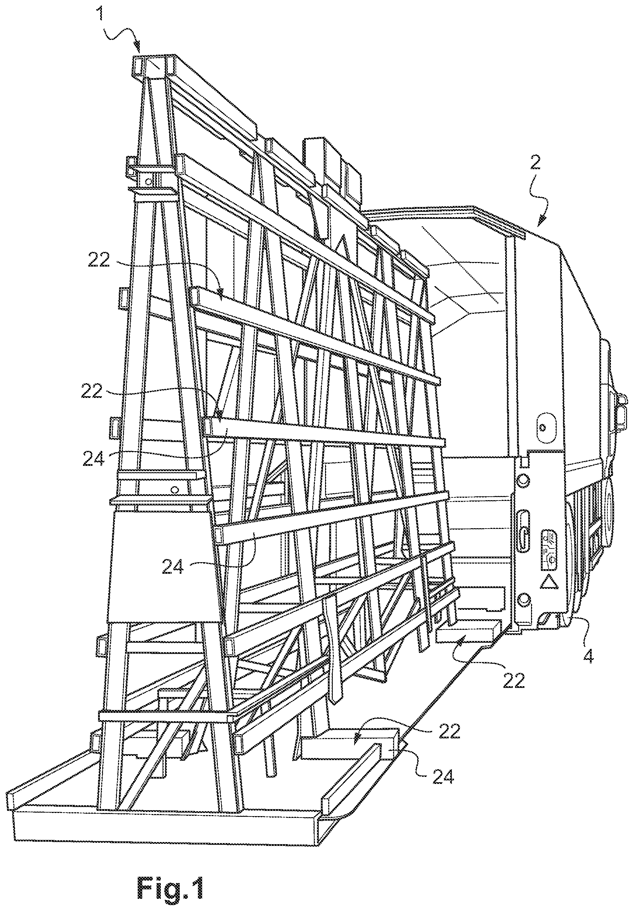

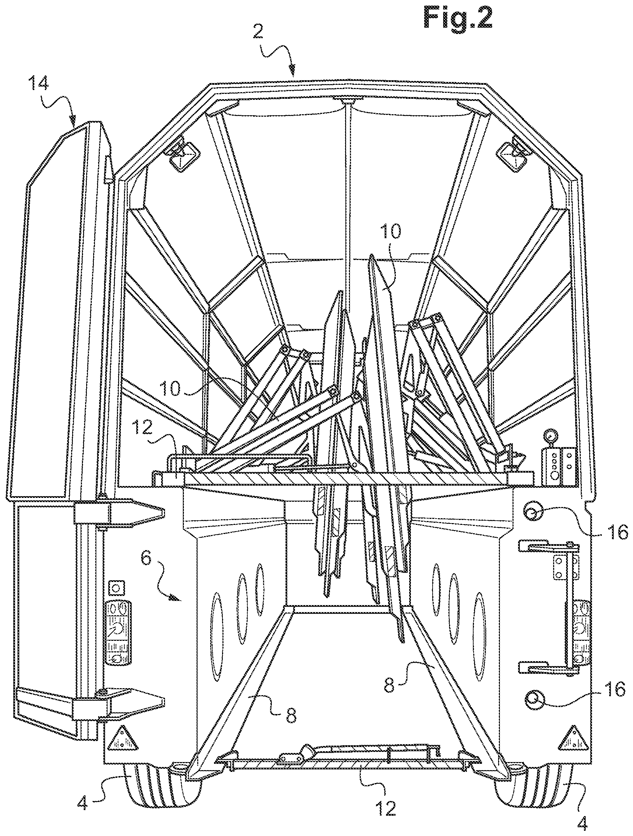

Les remorques de camion utilisées pour le transport de ces plaques de grandes dimensions présentent la particularité de ne pas avoir d'essieux traversants, de façon à pouvoir loger les plaques entre les roues. Les plaques sont en effet si grandes et si lourdes qu'il est nécessaire, pour un transport dans de bonnes conditions, d'abaisser au maximum le centre de gravité du chargement dans la remorque. Comme illustré sur les figures 1 et 2, en l'absence d'agrès, la remorque présente un espace vide. Les agrès sont placés à cheval sur les bords intérieurs de la remorque et participent à la rigidité de la remorque. Un exemple d'un véhicule de transport muni d'un agrès de stockage est montré dans document US 5,209,540.

Un inconvénient de ce type de transport est que les camions font le trajet du retour à vide, ce qui a un coût.

La présente invention a pour objet un agrès de stockage, de manutention et de transport de plaques planes de grandes dimensions selon la revendication 1.

Ces agrès ont pour avantage de permettre, à la fois le transport de plaques de grandes dimensions telles que des plaques de verre grand format (6 x 3.2m) lors du trajet aller, et le transport de produits finis plus petits tels que des vitrages pour l'automobile ou le bâtiment, par exemple des vitrages feuilletés, des doubles vitrages, d'autres frets verriers ou non verriers, etc., qui sont transportables dans des remorques classiques de type « savoyarde ».

En effet, après déstockage des plaques, il est possible de plier les agrès de telle sorte qu'ils forment une surface de plancher à une hauteur permettant un chargement classique à quai. La hauteur de la surface de plancher par rapport à la surface d'appui au sol du socle est par exemple de 80cm, ce qui permet un ajustement de hauteur entre par exemple 80cm et 120cm avec le système d'élévation pneumatique de la remorque.

En outre, les agrès peuvent également servir de palettes de stockage et de manutention après pliage en configuration de plancher.

L'invention est de ce fait particulièrement avantageuse d'un point de vue économique.
Selon des modes particuliers de réalisation, l'agrès comporte en outre l'une ou plusieurs des caractéristiques suivantes prise(s) isolément ou suivant toutes les combinaisons techniquement possibles : - en configuration de portage de plaques, ladite surface de plancher est escamotée ;
- ladite surface de portage comprend une surface de portage vertical pour porter verticalement les plaques, et une surface de portage latéral pour porter latéralement les plaques ;
- l'agrès comprend des groupes de bras articulés ;
- ladite surface de portage latéral est portée par des groupes de plusieurs bras articulés ;
- en configuration de portage, dans chacun desdits groupes de bras articulés portant la surface de portage latéral, les bras articulés sont alignés de façon à former une surface de portage latéral plane ;
- l'agrès est de type en L et comprend une seule surface de portage latéral, ladite surface de portage vertical formant la base du L et ladite surface de portage latéral formant le côté du L ;
- en configuration de portage de plaque de grandes dimensions, ladite surface de plancher (26) est derrière ladite surface de portage latéral ;
- ladite surface de plancher (26) est portée par des groupes de bras articulés dits de plancher, ladite surface de plancher (26) étant de préférence d'un seul tenant ;
- l'agrès comprend une surface d'appui au sol, et dans lequel, en configuration de plancher, la surface de plancher (26) est à une hauteur d'au moins 40cm et d'au plus 130cm par rapport à ladite surface d'appui au sol, de préférence d'au moins 60cm et d'au plus 120cm, de préférence encore d'au moins 70cm et d'au plus 90cm ;
- en configuration de plancher, au moins l'un des bras articulés de portage latéral sert de montant de support à la surface de plancher ;
- chaque groupe de bras articulés de portage de plaques de grandes dimensions est articulé à un groupe de bras articulés de plancher ;
- en configuration de plancher, les bras articulés de portage de plaques de grandes dimensions et les bras articulés de plancher forment ensemble un cadre de support de la surface de plancher, en forme de U inversé ;
- l'agrès comprend un système de commande, et au moins un actionneur, par exemple pneumatique, hydraulique ou électrique, configurés pour que le système de commande commande l'actionneur et ainsi transforme ou assiste la transformation de l'agrès de la configuration de plancher vers la configuration de portage de plaques ou de la configuration de portage vers la configuration de plancher.

L'invention a également pour objet un véhicule de transport de plaques de grandes dimensions, comprenant un agrès tel que décrit ci-dessus.

Selon un mode particulier de réalisation, le véhicule est un véhicule de transport par route comprenant une remorque sans essieu traversant, la remorque étant adaptée pour recevoir l'agrès entre ses roues.

L'invention a encore pour objet un procédé de transport par un véhicule utilisant un agrès selon la revendication 17.

Selon des modes particuliers de réalisation, le procédé comprend l'une ou plusieurs des caractéristiques suivantes prise(s) isolément ou selon tous les combinaisons techniquement possibles :
- le véhicule est un véhicule de transport par route comprenant une remorque sans essieu traversant ;
- le procédé comprend une étape de chargement de l'agrès par recul du véhicule, l'agrès étant au sol ;
- les plaques sont des plaques de verre ;
- les plaques ont des dimensions de préférence d'au moins 3 mètres par au moins 5 mètres ;
- le procédé comprend une étape de manutention des plaques de grandes dimensions, au moyen dudit agrès, la manutention étant réalisée au moyen d'un véhicule avec fourche élévatrice, entre une usine de fabrication des plaques de grandes dimensions, et ledit véhicule de transport dans lequel l'agrès est chargé.

L'invention sera mieux comprise à la lecture de la description qui va suivre, faite uniquement à titre d'exemple illustratif et en référence aux figures ci-dessous sur lesquelles :
- la figure 1 et 2 est une vue en perspective illustrant un agrès classique en « A » et une remorque de type « Inloader » et la figure 2 une vue de la même remorque en perspective de l'arrière et plus détaillée ;
- les figures 3 et 4 sont des vues schématiques arrières représentant les agrès en « A » (figure 3) et en « L » (figure 4) à l'intérieur de la remorque avec un chargement de plaques de verre ;
- les figures 5 et 5bis sont des vues schématiques partielles en perspective de prototypes à échelle réduite d'agrès transformable en L en configuration de transport de plaque (figure 5) et en configuration de plancher (figure 5bis) ;
- les figures 6 à 6 quinquies sont des vues schématiques partielles de profil illustrant la transformation de l'agrès des figures 5 et 5 bis de sa configuration de portage de plaque jusqu'à sa configuration de plancher ;
- les figures 7 à 7quinuies sont des vues schématiques partielles de profil de la transformation d'un agrès de type en « A ».

La figure 1 illustre un agrès prêt à être chargé dans une remorque 2 de type « Inloader ».

Comme visible plus en détail sur la figure 2, la remorque 2 a la particularité de ne pas avoir d'essieu traversant, ni de plancher en son milieu. Un espace entre les roues 4 est entièrement vide sur toute la hauteur hors toit de la remorque, de façon à accueillir l'agrès 1 de la figure 1. En outre, comme visible sur la figure 1, le remorque 2 est pourvue d'un système d'abaissement (par exemple hydraulique ou pneumatique) de la structure porteuse 6 de la remorque par rapport à ses roues, jusqu'à une position de chargement au ras du sol (figure 1) et de relèvement jusqu'à une position de transport (figure 2).

La structure porteuse 6 de la remorque 2 est munie de deux rebords 8 formant des rails latéraux de support de l'agrès 1. Les rails 8 sont plats et parallèles. En position abaissée de la remorque 2, l'agrès 1 glisse sur ces rails 8 lors d'une marche arrière de la remorque. La largeur de l'agrès 1 correspond sensiblement à l'écartement des rails 8 plus leur largeur, de façon à bénéficier d'un bon appui sur les rails 8.

La remorque 2 est également pourvue de bras pliables d'appui 10 destinés à maintenir les plaques de verre en position. Les bras d'appui 10 (figures 2, 3 et 4) sont actionnés par un système de commande, par exemple pneumatique ou hydraulique.

Deux barres 12 formant butée sont destinés à empêcher l'agrès 1 de glisser après chargement, et à empêcher la remorque de s'écarter.

Enfin, la porte 14 de la remorque participe à la structure. Elle est munie à cet effet d'organes mâles (non visibles sur les figures), par exemple coniques, s'emboîtant dans des logements femelles 16 de forme complémentaire prévus sur la structure porteuse 6 de la remorque 2.

En variante, la porte 14 est pourvue de reliefs de tout type adapté pour un accrochage latéral, du côté de son extrémité libre, dans la structure porteuse 6 de la remorque.

En variante, il peut s'agir d'une autre remorque sans essieu traversant de tout type adapté pour charger les agrès 1 qui seront décrits ci-après et que l'invention concerne plus particulièrement.

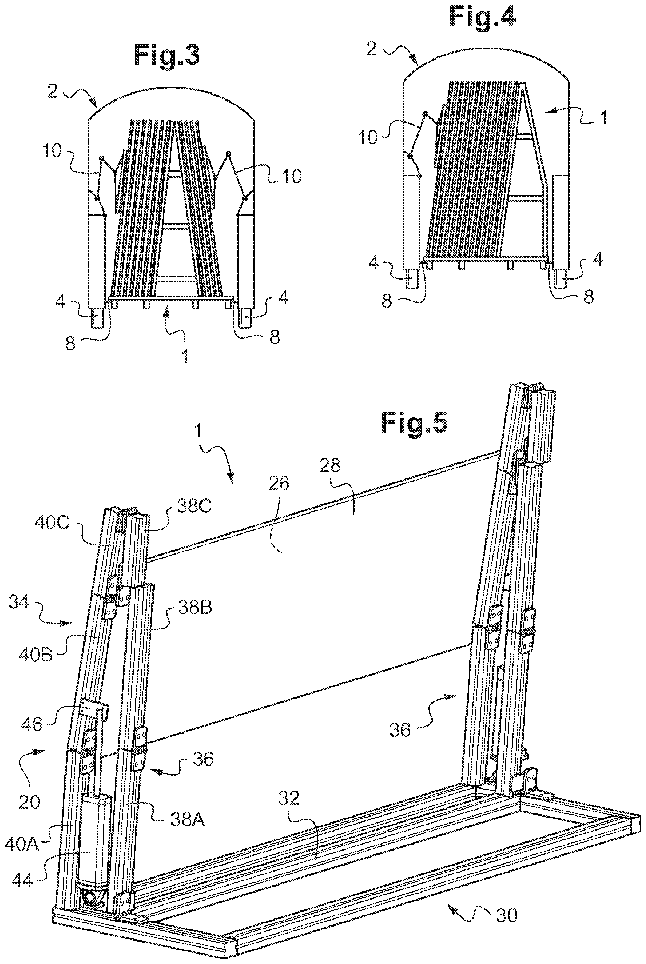

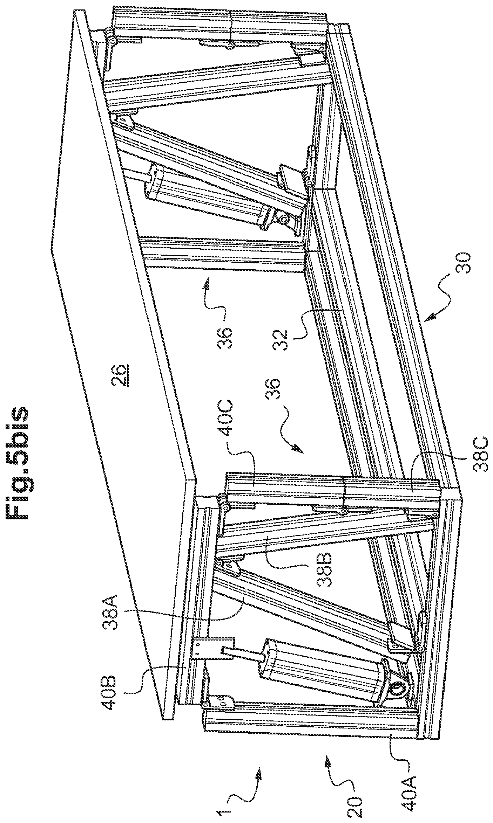

Les figures 5 et 5bis illustrent un agrès de type en L, transformable selon l'invention.

Cet agrès est en effet pliable entre une configuration de portage de plaques de grandes dimensions (figure 5), et une configuration de plancher (figure 5 bis).

Dans la configuration de portage de plaques de grandes dimensions, e.g. de plaques de verre grand format, l'agrès est apte à porter les plaques de grandes dimensions en « position debout » et en grand nombre. Il s'agit par exemple de plaques de verre de 6 x 3,2 mètres, empilées sur une épaisseur d'environ 1 mètre, atteignant un chargement maximal de l'ordre de 28 tonnes.

A cet effet, l'agrès possède une surface de portage vertical (i.e. une surface horizontale permettant un portage suivant la direction verticale), et une surface de portage latéral pour un portage latéral.

Les figures 5 et 5bis sont des illustrations de prototypes à échelle réduite. Seules l'ossature 20, qui est articulée, et la surface de plancher de l'agrès sont visibles sur ces figures. L'agrès selon l'invention, comporte également, comme visible sur la figure 1, des traverses 22 de support des plaques de grandes dimensions mais qui ne sont pas représentées sur les figures 5 et 5bis pour plus de clarté. Ces traverses participent à la structure et sont par exemple soudées à l'ossature 20, rigidifiant ainsi l'ensemble.

Qui plus est, les traverses 22 sont pourvues de bandes 24 de caoutchouc (figure 1) ou autre matériau adapté (également non représentées sur les figures5 et 5bis), formant la surface de contact avec les plaques de verre, i.e. la surface de portage des plaques de verre.

L'agrès 1 forme également une surface de plancher 26 en configuration de plancher. A cet effet, l'agrès 1 comporte par exemple une plaque 28 de bois ou autre matériau adapté, fixée sur la structure 20 de bras articulés, pour former une surface horizontale de plancher en configuration de plancher.

Dans la configuration de plancher, les surface de portage des plaques de grandes dimensions sont escamotées, plus particulièrement protégées sous la surface de plancher 26.

Inversement, en configuration de portage des plaques, la surface de plancher 26 est escamotée derrière l'agrès, de façon à ne pas être en contact avec les plaques.

Le mécanisme de l'ossature 20 des figures 5 et 5bis va être décrit plus en détail à titre illustratif mais il s'agit en variante d'un mécanisme de tout type adapté.

L'ossature 20 comporte un socle horizontal 30 d'appui en forme de cadre ou un autre socle de tout type adapté. Ce socle 30 est fixe lors des transformations. Il s'agit dans l'exemple d'un cadre rectangulaire formé de quatre bras.

Le socle 30 comprend également un cinquième bras 32 renforçant la structure du cadre.

L'ossature 20 comprend en outre une partie de portage latéral 34, qui est articulée. Cette partie de portage latéral 34 comprend plusieurs groupes de bras articulés, qui sont identiques. Il s'agit dans l'exemple illustré de deux groupes 36 situés aux extrémités longitudinales de l'agrès. En variante, leur nombre est de tout type adapté.

Chaque groupe 36 comprend des bras articulés de portage 38A, 38B, 38C de plaques de grandes dimensions, sur lesquels sont fixés les surfaces de portage, et des bras articulés de plancher 40A, 40B, 40C, sur l'un desquels est fixée la surface de plancher. En variante cependant, le nombre de bras de portage ou de plancher sur lesquels sont fixés des surface de portage ou de plancher est de tout type adapté.

Ci-dessous un groupe est décrit.

Les bras articulés de portage sont articulés successivement et les bras de plancher articulés successivement. Le dernier bras des bras de portage 38C est en outre articulé au dernier bras des bras de plancher 40C.

Plus particulièrement, les bras de portage comprennent un bras de support 38A articulé sur le socle, un bras intermédiaire 38B articulé sur le bras de support et un dernier bras articulé 38C sur le bras intermédiaire.

Les bras de plancher comprennent quant à eux également un bras de support 40A fixé sur le socle, un bras intermédiaire 40B articulé sur le bras de support et un dernier bras 40C articulé sur le bras intermédiaire.

En variante, le nombre de bras articulés de portage et de plancher est de tout type adapté.

Les articulations illustrées sont toutes des articulations pivot permettant uniquement une rotation autour de l'axe longitudinal de l'agrès. Des charnières sont par exemple utilisées. En variante, il s'agit cependant d'articulations de tout type adapté, par exemple de liaisons rotules.

En configuration de plancher, les bras articulés sont agencés et de longueurs adaptées pour que les bras de portage soient alignés et pour que la surface de portage des plaques de grandes dimensions soit plane. En variante cependant, la surface de portage n'est pas nécessairement plane dans la mesure où elle est adaptée. La surface de portage latérale ainsi formée est sensiblement verticale. Elle forme par exemple un angle de 4° par rapport à la verticale. A noter d'ailleurs qu'on entend par « la surface de portage » la somme de toutes les surfaces de portage.

En configuration de plancher, les bras de plancher sont sensiblement verticaux, la structure de bras articulée 20 formant sensiblement un V inversé dont la base est formée par l'articulation entre les bras de plancher et les bras de portage.

Plus précisément, le bras de support 40A est sensiblement vertical, et le dernier bras 40C et le bras intermédiaire 40B sont alignés et inclinés vers les bras de portage 38A, 38B, 38C.

En configuration de plancher, les bras de plancher forment avec le dernier bras de portage un U inversé.

Le bras de support de plancher 40A forme une branche du U, le bras intermédiaire 40B la base du U et le dernier bras de plancher 40C et le dernier bras de portage 38Csont alignés pour former la deuxième branche du U.

La surface de plancher 26 est portée par le bras intermédiaire 40B, posée et fixée sur ce dernier. Le bras intermédiaire 40B est horizontal et la surface de plancher 26 horizontale. A noter d'ailleurs également qu'on entend par « la surface de plancher » la somme des surface de plancher dans le cas où, contrairement à cet exemple, il y en aurait plusieurs qui seraient par exemple jointives en configuration de plancher.

Les bras de support 38A et bras intermédiaire 38B de portage sont quant à eux pliés en V inversé sous le bras intermédiaire de plancher 40B.

Pour permettre la transformation assistée de l'agrès de sa configuration de portage vers sa configuration de plancher et inversement, l'agrès est pourvu d'un système de commande (non représenté) et de différents actionneurs (seuls deux sont représentés) pour certains groupes de bras articulés. L'actionneur est de tout type adapté, par exemple hydraulique, pneumatique, ou électrique, et l'agrès comprend de préférence des moyens de connexion hydraulique, pneumatique ou électrique de l'actionneur avec le système d'abaissement de la remorque.

Le ou chaque actionneur 44 est articulé à sa base sur le socle 30 et à son extrémité mobile 46 monté pivotant dans une glissière du bras intermédiaire de plancher 40B, i.e. en liaison pivotant glissante avec le bras 40B. Plus généralement, l'actionneur 44 est articulé par exemple sur le socle 30 et articulé à l'un des bras articulés de la structure 20, de façon à réaliser ou à faciliter la transformation de l'agrès.

En outre, un ou plusieurs actionneurs (non représentés) sont également articulés entre les bras de portage 38B et 38C.

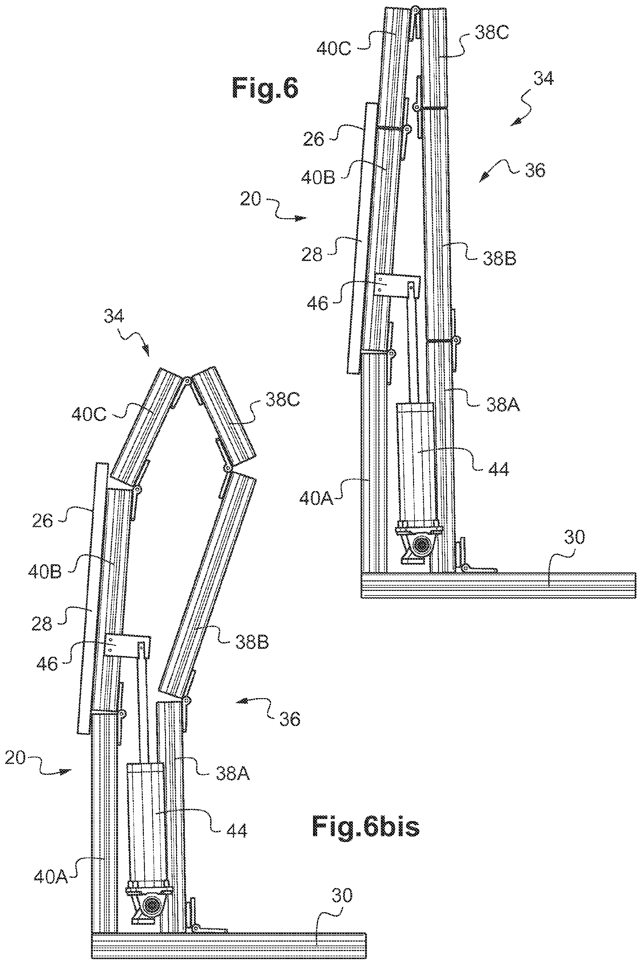

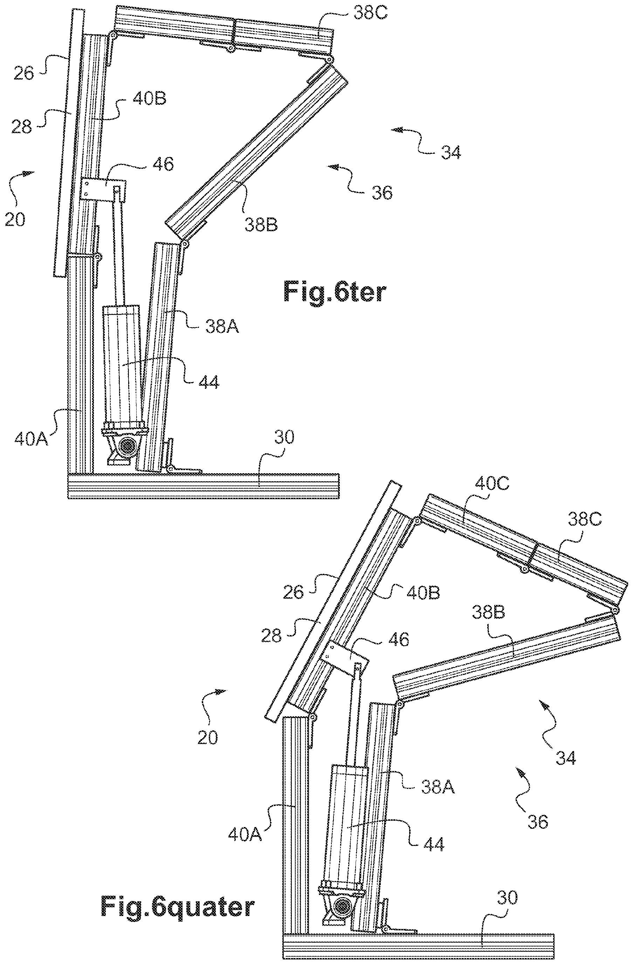

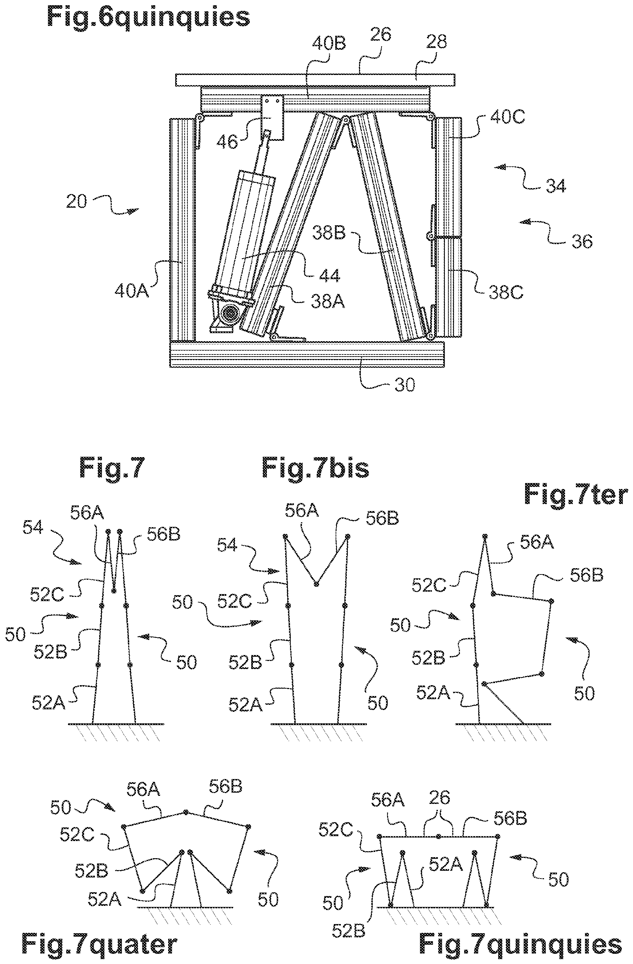

Les figures 6 à 6 quinquies illustrent la transformation de l'agrès.

Sur la figure 6 bis, un actionneur positionné entre les bras de portage 38B et 38C casse l'alignement de 38B et 38C, ce qui casse également l'alignement entre les bras de portage 38A et 38B d'une part, et entre le bras intermédiaire 40B et le dernier bras de plancher 40C d'autre part.

Sous l'action de la gravité et de l'actionneur positionné entre 38B et 38C (figure 6 ter), le dernier bras de plancher 40C et le dernier bras de pliage 38C s'alignent, ce qui augmente l'angle entre le bras intermédiaire de portage 38B et son bras de support 38A.

Sur la figure 6 quater, l'actionneur 44 commence son action de retrait, i.e. il se raccourcit. L'inclinaison entre le bras intermédiaire de plancher 40B et le bras de support 40A est augmentée, ce qui augmente l'inclinaison des autres angles déjà cassés. Le « U » de support de la surface de plancher est déjà quasiment formé et le pliage en V du bras de support de portage 38A et du bras intermédiaire de portage 38B est également en formation.

Le retrait de l'actionneur 44 continue jusqu'à atteindre la configuration de la figure 6 quinquies, i.e. la configuration de plancher.

L'invention n'est cependant pas limitée à des agrès de type en L. Il s'agit en variante d'agrès de tout type adapté, et par exemple d'agrès de type en A (comme illustré sur la figure 1), i.e. symétriques et possédant deux surfaces de portage latéral formées par les branches du A.

Les figures 7 à 7 quinquies illustrent d'ailleurs un agrès de type en A transformable entre une configuration de portage (figure 7) et une configuration de plancher (figure 7 quinquies). Seules les différences par rapport à l'agrès de type en L seront décrites ci-dessous.

Les groupes de bras articulés comprennent chacun deux sous-groupes 50 de trois bras de portage 52A, 52B, 52C et un sous-groupe 54 de deux bras de plancher 56A, 56B.

En configuration de portage, les bras de portage 52A, 52B, 52C de chaque sous-groupe 50 sont alignés pour former chacun une branche du A. Les bras de plancher 56A, 56B sont articulés sur le dernier bras 52C de chaque sous-groupe 50, et escamotés entre les deux sous-groupes 50 de bras de portage.

En configuration de plancher, les bras de portage de support 52A et intermédiaire 52B sont pliés en V inversé et les derniers bras de portage 52C en position verticale, de façon à porter les bras de plancher 56A, 56B.

Les bras de plancher 56A, 56B sont quant à eux en position horizontale et alignés. Chaque bras de plancher 56A, 56B porte une moitié de la surface de plancher 26, ainsi reconstituée.

Pour passer de la configuration de portage à la configuration de plancher, les deux sous-groupes de bras de portage sont d'abord écartés l'un de l'autre, ce qui déplie les bras de plancher.

Le pliage d'un premier sous-groupe de bras de portage 50 est ensuite amorcé, tandis que le deuxième sous-groupe 50 reste déplié (figure 7 ter). Puis le deuxième sous-groupe est plié (figure 7 quater), avant de continuer le pliage simultané des deux sous-groupes 50 et d'arriver en configuration de plancher (figure 7 quinquies). Plusieurs actionneurs (non représentés), par exemple un actionneur pour chaque sous-groupe de bras de portage 50, seront de préférence utilisés, de façon à synchroniser les pliages de façon adaptée.

En variante, il s'agit d'une autre structure articulée de tout type adapté.

## Revendications

1. Agrès (1) de stockage, de manutention et de transport de plaques planes de grandes dimensions, comprenant au moins une surface de portage pour porter les plaques, une surface de plancher (26) et une ossature articulée, dans lequel la surface de plancher (26) est fixée sur l'ossature articulée et l'agrès est pliable entre une configuration de portage de plaques et une configuration de plancher dans laquelle ladite surface de portage est escamotée sous la surface de plancher (26),
ledit agrès (1) étant adapté pour alternativement reposer sur le sol et être chargé dans un véhicule de transport de plaques de grandes dimensions.

2. Agrès (1) selon la revendication 1, dans lequel, en configuration de portage de plaques, ladite surface de plancher (26) est escamotée.

3. Agrès (1) de stockage selon la revendication 1 ou 2, dans lequel ladite surface de portage comprend une surface de portage vertical pour porter verticalement les plaques, et une surface de portage latéral pour porter latéralement les plaques.

4. Agrès selon l'une quelconque des revendications précédentes, comprenant des groupes de bras articulés.

5. Agrès (1) selon la revendication 3 ou 4, dans lequel ladite surface de portage latéral est portée par des groupes de plusieurs bras articulés.

6. Agrès (1) selon la revendication précédente, dans lequel, en configuration de portage, dans chacun desdits groupes de bras articulés portant la surface de portage latéral, les bras articulés sont alignés de façon à former une surface de portage latéral plane.

7. Agrès (1) selon l'une quelconque des revendications, dans lequel l'agrès est de type en L et comprend une seule surface de portage latéral, ladite surface de portage vertical formant la base du L et ladite surface de portage latéral formant le côté du L.

8. Agrès (1) selon la revendication précédente, dans lequel, en configuration de portage de plaque de grandes dimensions, ladite surface de plancher (26) est derrière ladite surface de portage latéral.

9. Agrès (1) selon l'une quelconque des revendications précédentes, dans lequel ladite surface de plancher (26) est portée par des groupes de bras articulés dits de plancher, ladite surface de plancher (26) étant de préférence d'un seul tenant.

10. Agrès (1) selon l'une quelconque des revendications précédentes, comprenant une surface d'appui au sol, et dans lequel, en configuration de plancher, la surface de plancher (26) est à une hauteur d'au moins 40cm et d'au plus 130cm par rapport à ladite surface d'appui au sol, de préférence d'au moins 60cm et d'au plus 120cm, de préférence encore d'au moins 70cm et d'au plus 90cm

11. Agrès selon la revendication précédente, dans lequel, en configuration de plancher, au moins l'un des bras articulés de portage latéral sert de montant de support à la surface de plancher.

12. Agrès selon la revendication 10 ou 11, dans lequel chaque groupe de bras articulés de portage de plaques de grandes dimensions est articulé à un groupe de bras articulés de plancher.

13. Agrès selon la revendication 12, dans lequel, en configuration de plancher, les bras articulés de portage de plaques de grandes dimensions et les bras articulés de plancher forment ensemble un cadre de support de la surface de plancher, en forme de U inversé.

14. Agrès (1) selon l'une quelconque des revendications précédentes, comprenant un système de commande, et au moins un actionneur, par exemple pneumatique, hydraulique ou électrique, configurés pour que le système de commande commande l'actionneur et ainsi transforme ou assiste la transformation de l'agrès de la configuration de plancher vers la configuration de portage de plaques ou de la configuration de portage vers la configuration de plancher.

15. Véhicule de transport de plaques de grandes dimensions, comprenant un agrès (1) selon l'une quelconque des revendications précédentes.

16. Véhicule selon la revendication précédente, dans lequel le véhicule est un véhicule de transport par route comprenant une remorque (2) sans essieu traversant, la remorque étant adaptée pour recevoir l'agrès (1) entre ses roues (4).

17. Procédé de transport par un véhicule utilisant un agrès (1) selon l'une quelconque des revendications 1 à 16,
le procédé comprenant une étape de transformation de l'agrès entre une configuration de portage de plaques et une configuration de plancher dans laquelle ladite surface de portage est escamotée sous la surface de plancher (26).

18. Procédé selon la revendication précédente, dans lequel le véhicule est un véhicule de transport par route comprenant une remorque sans essieu traversant, le procédé comprenant de préférence une étape de chargement de l'agrès (1) par recul du véhicule, l'agrès (1) étant au sol.

19. Procédé selon la revendication 17 ou 18, dans lequel les plaques sont des plaques de verre dont les dimensions sont de préférence d'au moins 3 mètres par au moins 5 mètres.

20. Procédé selon l'une quelconque des revendications 17 à 19, comprenant une étape de manutention des plaques de grandes dimensions , au moyen dudit agrès, la manutention étant réalisée au moyen d'un véhicule avec fourche élévatrice, entre une usine de fabrication des plaques de grandes dimensions, et ledit véhicule de transport dans lequel l'agrès est chargé.

## Patentansprüche

1. Vorrichtung (1) für Lagerung, Handhabung und Transport von großen flachen Platten, umfassend mindestens eine Tragfläche zum Tragen der Platten, eine Bodenfläche (26) und ein Gelenkgestell, wobei die Bodenfläche (26) am Gelenkgestell befestigt ist und die Vorrichtung zwischen einer Plattentragkonfiguration und einer Bodenkonfiguration, in der die Tragfläche unter die Bodenfläche (26) eingeklappt ist, zusammenlegbar ist,
wobei die Vorrichtung (1) dazu geeignet ist, alternativ auf dem Boden zu stehen und in ein Transportfahrzeug für große Platten geladen zu sein.

2. Vorrichtung (1) nach Anspruch 1, wobei die Bodenfläche (26) in der Plattentragkonfiguration eingeklappt ist.

3. Vorrichtung (1) für Lagerung nach Anspruch 1 oder 2, wobei die Tragfläche eine vertikale Tragfläche zum vertikalen Tragen der Platten und eine seitliche Tragfläche zum seitlichen Tragen der Platten umfasst.

4. Vorrichtung nach einem der vorhergehenden Ansprüche, umfassend Gruppen von Gelenkarmen.

5. Vorrichtung (1) nach Anspruch 3 oder 4, wobei die seitliche Tragfläche von Gruppen aus mehreren Gelenkarmen getragen wird.

6. Vorrichtung (1) nach dem vorhergehenden Anspruch, wobei in der Tragkonfiguration in jeder der Gruppen von Gelenkarmen, die die seitliche Tragfläche tragen, die Gelenkarme fluchten, so dass sie eine flache seitliche Tragfläche bilden.

7. Vorrichtung (1) nach einem der Ansprüche, wobei die Vorrichtung L-förmig ausgeführt ist und eine einzelne seitliche Tragefläche umfasst, wobei die vertikale Tragefläche die Grundseite des L bildet und die seitliche Tragefläche die Seite des L bildet.

8. Vorrichtung (1) nach dem vorhergehenden Anspruch, wobei die Bodenfläche (26) in der Konfiguration zum Tragen großer Platten hinter der seitlichen Tragfläche ist.

9. Vorrichtung (1) nach einem der vorhergehenden Ansprüche, wobei die Bodenfläche (26) von Gruppen aus Gelenkarmen, Bodengelenkarme genannt, getragen wird, wobei die Bodenfläche (26) bevorzugt zusammenhängend ist.

10. Vorrichtung (1) nach einem der vorhergehenden Ansprüche, die eine Bodenauflagefläche umfasst und wobei die Bodenfläche (26) in der Bodenkonfiguration auf einer Höhe von mindestens 40 cm und höchstens 130 cm, bevorzugt von mindestens 60 cm und höchstens 120 cm, noch bevorzugter von mindestens 70 cm und höchstens 90 cm in Bezug auf die Bodenauflagefläche ist.

11. Vorrichtung nach dem vorhergehenden Anspruch, wobei in der Bodenkonfiguration mindestens einer der Gelenkarme zum seitlichen Tragen für die Bodenfläche als Stützständer dient.

12. Vorrichtung nach Anspruch 10 oder 11, wobei jede Gruppe von Gelenkarmen zum Tragen großer Platten an eine Gruppe von Bodengelenkarmen angelenkt ist.

13. Vorrichtung nach Anspruch 12, wobei in der Bodenkonfiguration die Gelenkarme zum Tragen großer Platten und die Bodengelenkarme gemeinsam einen Stützrahmen für die Bodenfläche in Form eines umgekehrten U bilden.

14. Vorrichtung (1) nach einem der vorhergehenden Ansprüche, umfassend ein Steuerungssystem und mindestens einen Aktuator, beispielsweise pneumatisch, hydraulisch oder elektrisch, die so ausgestaltet sind, dass das Steuerungssystem den Aktuator steuert und so die Vorrichtung aus der Bodenkonfiguration in die Plattentragkonfiguration oder aus der Tragkonfiguration in die Bodenkonfiguration umwandelt oder die Umwandlung unterstützt.

15. Transportfahrzeug für große Platten, umfassend eine Vorrichtung (1) nach einem der vorhergehenden Ansprüche.

16. Fahrzeug nach dem vorhergehenden Anspruch, wobei das Fahrzeug ein Straßentransportfahrzeug ist, das einen Anhänger (2) ohne durchgehende Achse umfasst, wobei der Anhänger dazu geeignet ist, die Vorrichtung (1) zwischen seinen Rädern (4) aufzunehmen.

17. Transportverfahren durch ein Fahrzeug unter Verwendung einer Vorrichtung (1) nach einem der Ansprüche 1 bis 16,
wobei das Verfahren einen Schritt des Umwandelns der Vorrichtung zwischen einer Plattentragkonfiguration und einer Bodenkonfiguration umfasst, bei dem die Tragfläche unter die Bodenfläche (26) eingeklappt wird.

18. Verfahren nach dem vorhergehenden Anspruch, wobei das Fahrzeug ein Straßentransportfahrzeug ist, das einen Anhänger ohne durchgehende Achse umfasst, wobei das Verfahren bevorzugt einen Schritt des Ladens der Vorrichtung (1) durch Zurücksetzen des Fahrzeugs umfasst, während die Vorrichtung (1) auf dem Boden steht.

19. Verfahren nach Anspruch 17 oder 18, wobei die Platten Glasplatten sind, deren Abmessungen bevorzugt mindestens 3 Meter mal mindestens 5 Meter betragen.

20. Verfahren nach einem der Ansprüche 17 bis 19, umfassend einen Schritt der Handhabung der großen Platten mittels der Vorrichtung, wobei die Handhabung mittels eines Gabelhubwagens zwischen einem Werk zur Herstellung der großen Platten und dem Transportfahrzeug, in das die Vorrichtung geladen wird, durchgeführt wird.

## Claims

1. An independent cradle (1) for storing, handling and transporting large flat sheets, including at least one supporting surface for supporting the sheets, a floor surface (26) and an articulated framework,
wherein the floor surface (26) is fixed on the articulated framework and the cradle can be folded between a sheet supporting configuration and a floor configuration in which said supporting surface is retracted under the floor surface (26), said cradle (1) being adapted to alternatively rest on the ground and be loaded in a vehicle for transporting large sheets.

2. The cradle (1) as claimed in claim 1, wherein, in the sheet support configuration, said floor surface (26) is retracted.

3. The cradle (1) as claimed in claim 1 or 2, wherein said support surface comprises a vertical support surface for supporting the sheets vertically and a lateral support surface for supporting the sheets laterally.

4. The cradle as claimed in any one of the preceding claims, including groups of articulated arms.

5. The cradle (1) as claimed in claim 3 or 4, wherein said lateral support surface is supported by groups consisting of multiple articulated arms.

6. The cradle (1) as claimed in the preceding claim, wherein, in the supporting configuration, in each of said groups of articulated arms supporting the lateral support surface, the articulated arms are aligned so as to form a plane lateral support surface.

7. The cradle (1) as claimed in any one of the preceding claims, wherein the cradle is of the L-frame type and includes a single lateral support surface, said vertical support surface forming the base of the L-shape and said lateral support surface forming the side of the L-shape.

8. The cradle (1) as claimed in the preceding claim, wherein, in the configuration for supporting large sheets, said floor surface (26) is behind said lateral support surface.

9. The cradle (1) as claimed in any one of the preceding claims, wherein said floor surface (26) is supported by groups of so-called floor articulated arms, said floor surface (26) preferably being in one piece.

10. The cradle (1) as claimed in any one of the preceding claims, including a surface adapted to bear on the ground and wherein, in the floor configuration, the floor surface (26) is at a height of at least 40 cm and at most 130 cm relative to said surface adapted to bear on the ground, preferably at least 60 cm and at most 120 cm, more preferably at least 70 cm and at most 90 cm.

11. The cradle as claimed in the preceding claim, wherein, in the floor configuration, at least one of the lateral support articulated arms serves as a support upright for the floor surface.

12. The cradle as claimed in claim 10 or 11, wherein each group of articulated arms for supporting large sheets is articulated to a group of floor articulated arms.

13. The cradle as claimed in claim 12, wherein, in the floor configuration, the articulated arms for supporting large sheets and the floor articulated arms together form a support frame for the floor surface of inverted U-shape.

14. The cradle (1) as claimed in any one of the preceding claims, including a control system and at least one actuator, for example a pneumatic, hydraulic or electrical actuator, configured so that the control system controls the actuator and therefore converts or assists in the conversion of the cradle from the floor configuration to the configuration for supporting sheets or from the supporting configuration to the floor configuration.

15. A vehicle for transporting large sheets including a cradle (1) as claimed in any one of the preceding claims.

16. The vehicle as claimed in the preceding claim, wherein the vehicle is a road transport vehicle including a trailer (2) with no cross-axle, the trailer being adapted to receive the cradle (1) between its wheels (4).

17. A transportation method employing a vehicle using a cradle (1) according to any of claims 1 to 16, the method including a step of converting the cradle between a sheet support configuration and a floor configuration in which said support surface is retracted under the floor surface (26).

18. The method as claimed in the preceding claim, wherein the vehicle is a road transport vehicle including a trailer with no cross-axle, the method preferably including a step of loading the cradle (1) by reversing the vehicle, the cradle (1) being on the ground.

19. The method as claimed in claim 17 or 18, wherein the sheets are sheets of glass the dimensions of which are preferably at least 3 meters by at least 5 meters.

20. The method as claimed in any one of claims 17 to 19, including a step of handling the large sheets, by means of said cradle, the handling being effected by means of a forklift vehicle between a factory manufacturing the large sheets and said transport vehicle into which the cradle is loaded.
